# FASCICULE DE BREVET EUROPEEN

(11) **EP 1 188 014 B1**
(45) Date de publication et mention de la délivrance du brevet: **23.10.2002**
(21) Numéro de dépôt: 01927992.6
(22) Date de dépôt: 18.04.2001
(51) Int. Cl.: F16L 11/16, F16L 11/08

(54) **TUBE METALLIQUE FLEXIBLE A CAISSON ET CONDUITE FLEXIBLE COMPRENANT UN TEL TUBE METALLIQUE**
FLEXIBLE KASTENFÖRMIGE METALLKARKASSE UND EINE BIEGSAME ROHRLEITUNG MIT EINER SOLCHEN KARKASSE
FLEXIBLE METAL TUBE WITH CLOSED SECTION AND FLEXIBLE PIPE COMPRISING SAME

(30) Priorité: 21.04.2000 FR 0005175
(43) Date de publication de la demande: 20.03.2002
(73) Titulaire: COFLEXIP, 92973 Paris La Defense (FR); INSTITUT FRANCAIS DU PETROLE, 92500 Rueil Malmaison (FR)
(72) Inventeur: ESPINASSE, Philippe, F-76420 Bihorel (FR); JUNG, Patrice, Jo[l, Louis, F-76940 La Mailleraye sur Seine (FR); AVERBUCH, Daniel, F-92500 Rueil-Malmaison (FR); DUPOIRON, François, F-76360 Barentin (FR)
(74) Mandataire: Bertrand, Didier
(86) Numéro de dépôt international: FR0101188
(87) Numéro de publication internationale: WO01081810

(56) Documents cités:
- FR-A- 2 665 237
- US-A- 4 630 650
- US-A- 6 024 135

## Description

La présente invention concerne un tube métallique flexible à caisson et une conduite flexible comportant au moins un tel tube métallique.

COFLEXIP, une des sociétés déposantes, fabrique et commercialise depuis des décennies des conduites flexibles de grandes longueurs, à résistance mécanique élevée, utilisables notamment pour le transport de fluides tels que des hydrocarbures, en particulier dans des installations de production pétrolière sous-marine.

Plusieurs types de conduites flexibles sont couramment utilisés. Un premier type de conduite flexible, dénommé "Rough bore", est constitué par une carcasse métallique interne, réalisée à partir d'une bande métallique profilée à double agrafage, et résistant à l'écrasement, une gaine interne d'étanchéité, généralement polymérique, au moins une armure destinée à conférer à la conduite flexible une résistance importante à la pression interne et à la traction axiale et une gaine d'étanchéité externe, généralement polymérique. Une ou plusieurs gaines d'étanchéité, polymériques ou non, peuvent être également utilisées, par exemple entre des nappes d'armures lorsque la conduite flexible en comprend plusieurs.

Des conduites flexibles dénommées "Smooth bore" sont également utilisées et comprennent comme élément le plus interne une gaine d'étanchéité.

Des bandes métalliques profilées à double agrafage particulièrement performantes sont notamment décrites dans le brevet FR 2 654 795 du 21 novembre 1989 et ont été utilisées pour réaliser une carcasse interne d'une conduite flexible, en effectuant une déformation plastique d'un ruban métallique plat tel qu'un feuillard en acier inoxydable, pour lui conférer la forme d'une bande profilée à double agrafage, puis en effectuant un spiralage de la bande profilée, c'est-à-dire en l'enroulant hélicoïdalement à faible pas avec emboîtement des bandes métalliques profilées. Après emboîtement des deux spires consécutives, une dernière déformation plastique de la bande est effectuée pour compléter l'agrafage.

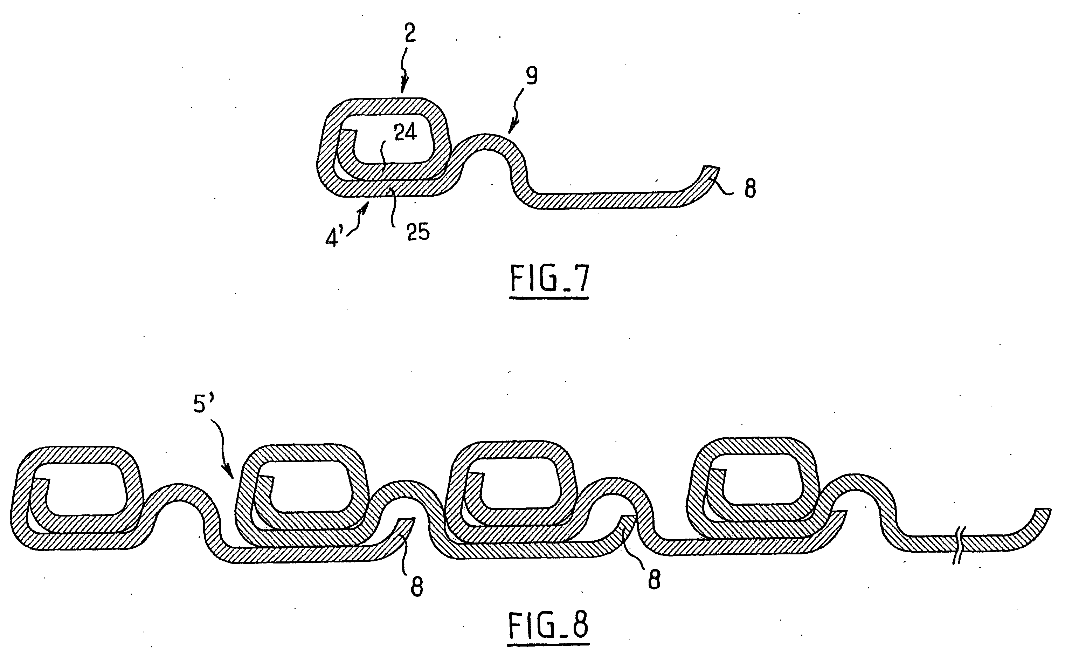

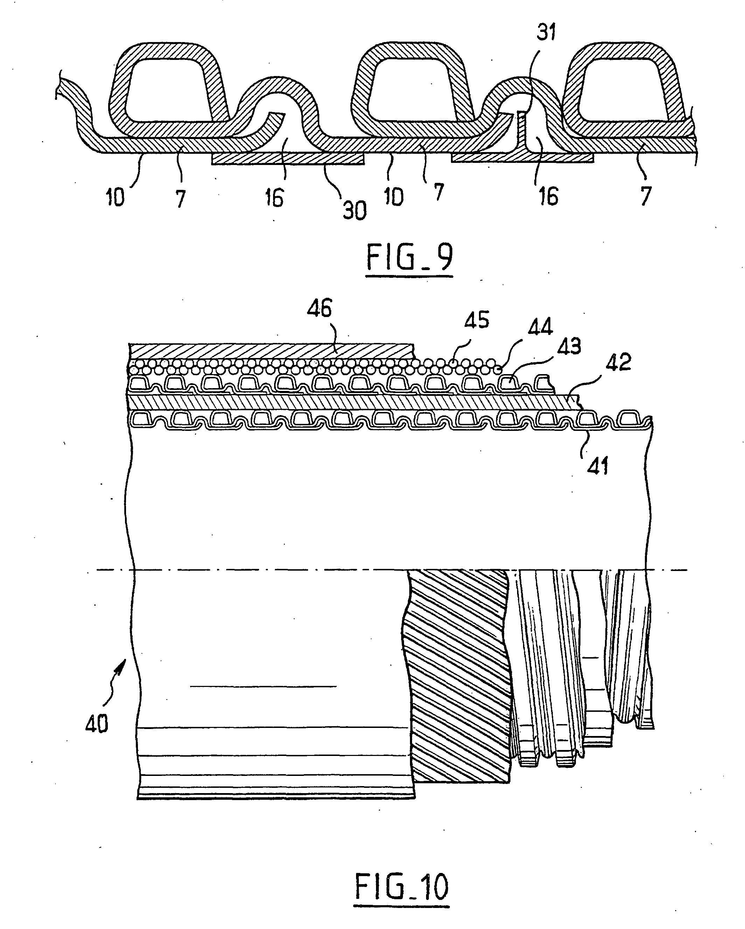

Dans le brevet FR 2 665 237, il est préconisé de réaliser une carcasse tubulaire métallique comportant au moins un caisson enroulé en hélice avec un faible pas, ladite carcasse métallique étant obtenue au moyen de deux bandes profilées complémentaires enroulées hélicoïdalement avec un faible pas. De nombreux exemples de bandes profilées sont décrits et représentés dans ce document, certains d'entre eux, comme par exemple ceux des figures 8 et 9, étant constitués par une bande en forme de S allongé et comportant un caisson à une première extrémité et un bord d'accrochage incurvé vers le haut à l'autre extrémité, le bord d'accrochage pénétrant dans une cuvette formée par le caisson et la barre transversale du S de la spire précédente. Le bord d'accrochage incurvé peut reposer sur le fond de la cuvette (figure 9) ou ne pas être en contact avec ledit fond (figure 8).

Il est à noter que toutes les sections des caissons ménagés à l'une et/ou à l'autre des extrémités de chaque bande profilée sont des sections carrées ou rectangulaires.

Bien que de telles bandes profilées à caisson aient donné satisfaction, il a été constaté certains inconvénients. Si on considère qu'un caisson est formé par des parties d'une même spire de la bande profilée et comporte une paroi supérieure, une paroi inférieure et des parois latérales et lorsqu'une force extérieure est appliquée sur l'une des parois supérieure et/ou inférieure, telle qu'une force de compression ou d'écrasement ou encore une force engendrée par le fluide de sous-pression, il se produit alors un flambage des parois ou faces latérales du caisson, ce qui diminue au moins localement la résistance à l'écrasement de la carcasse interne.

Pour des forces ou des pressions dépassant une certaine valeur, il se produit un flambage des parois latérales du caisson.

Pour des forces ou des pressions plus faibles et lorsque les parois latérales ne sont pas rigoureusement perpendiculaires aux parois supérieure et inférieure du caisson, il peut se produire un écrasement dudit caisson entraînant un écartement ou un rapprochement des parois latérales (ouverture ou fermeture du caisson). Pour éviter ces phénomènes d'ouverture ou de fermeture, il a été préconisé, dans certains cas, de souder une extrémité du caisson en un point de la bande. Mais une telle solution enchérit le coût de fabrication et elle est difficile à mettre en oeuvre.

De plus, les interstices ou déjoints, plus ou moins importants, qui existent entre deux spires consécutives ou entre deux parties adjacentes d'une même spire, tels ceux qui sont formés dans une cuvette, favorisent le fluage de la gaine d'étanchéité adjacente, ce qu'on cherche à éviter dans la mesure du possible dans le cas de la voûte de pression principalement.

La présente invention a pour but de remédier aux inconvénients précités et de proposer un tube métallique flexible, utilisable dans une conduite flexible, qui est plus adapté aux applications auxquelles il est destiné.

La présente invention a pour objet un tube métallique flexible d'axe longitudinal comprenant au moins une bande d'épaisseur sensiblement constante et enroulée hélicoïdalement autour dudit axe, ladite bande comportant au moins un caisson fermé dont les parois sont formées par des parties d'une même spire de la bande, ledit caisson comportant une paroi supérieure et une paroi inférieure et étant ménagé à une extrémité de ladite bande et dont l'autre extrémité se termine par un bord libre, et qui est caractérisé en ce que le caisson est de section trapézoïdale et en ce qu'un renflement dirigé radialement vers la paroi supérieure du caisson est ménagé entre ledit caisson et le bord libre de ladite bande.

La section trapézoïdale du caisson permet d'avoir une déformation des parois ou faces latérales du caisson qui est dirigée toujours dans la même direction, avec une tendance à l'ouverture du caisson.

Le renflement dirigé radialement vers la paroi supérieure du caisson et ménagé entre le caisson et le bord libre de la bande profilée présente de nombreux avantages.

En premier lieu, le renflement radial ou téton bloque l'ouverture du caisson lorsqu'elle se produit, ce qui permet d'obtenir une stabilité de la géométrie dudit caisson.

En deuxième lieu, la pénétration du bord libre de la bande dans le téton ou renflement radial adjacent, lorsqu'il est recourbé vers la face supérieure du caisson, permet un agrafage de deux spires consécutives de l'enroulement hélicoïdal.

Enfin, les dimensions et le positionnement du renflement radial sur la bande profilée peuvent être choisis de manière à limiter considérablement le fluage d'une gaine d'étanchéité qui serait en appui sur ladite bande.

D'autres avantages et caractéristiques apparaîtront à la lecture de la description de plusieurs modes de réalisation de l'invention, ainsi que des dessins annexés sur lesquels :
- la figure 1 est une vue en coupe d'un premier exemple d'une bande profilée utilisée pour la réalisation d'un tube métallique flexible selon l'invention ;
- la figure 2 est une vue en coupe de plusieurs bandes identiques agrafées, du type représenté sur la figure 1 ;
- la figure 3 est une vue en coupe d'un deuxième exemple d'une bande profilée utilisée pour la réalisation d'un tube métallique flexible selon l'invention ;
- la figure 4 est une vue en coupe de plusieurs bandes profilées assemblées et du type représenté sur la figure 3 ;
- la figure 5 est une vue en coupe d'un troisième exemple d'une bande profilée utilisée pour la réalisation d'un tube métallique flexible selon l'invention ;
- la figure 6 est une vue en coupe de plusieurs bandes profilées agrafées, du type représenté sur la figure 5 ;
- la figure 7 est une vue en coupe d'un quatrième exemple d'une bande profilée utilisée pour la réalisation d'un tube métallique flexible selon l'invention ;
- la figure 8 est une vue en coupe de plusieurs bandes profilées agrafées, du type représenté sur la figure 7 ;
- la figure 9 est une vue en coupe de plusieurs bandes profilées agrafées, selon un cinquième exemple de réalisation d'un tube métallique flexible selon l'invention ;
- la figure 10 est une vue schématisée éclatée, partiellement en coupe longitudinale, d'une conduite flexible comprenant une carcasse interne et une voûte de pression ;
- la figure 11 est analogue à la figure 10 mais avec une carcasse interne réalisée, de façon classique, avec un fil de forme agrafé ;
- la figure 12 est une vue en coupe d'un autre exemple d'une bande profilée utilisée pour la réalisation d'un tube métallique selon l'invention.

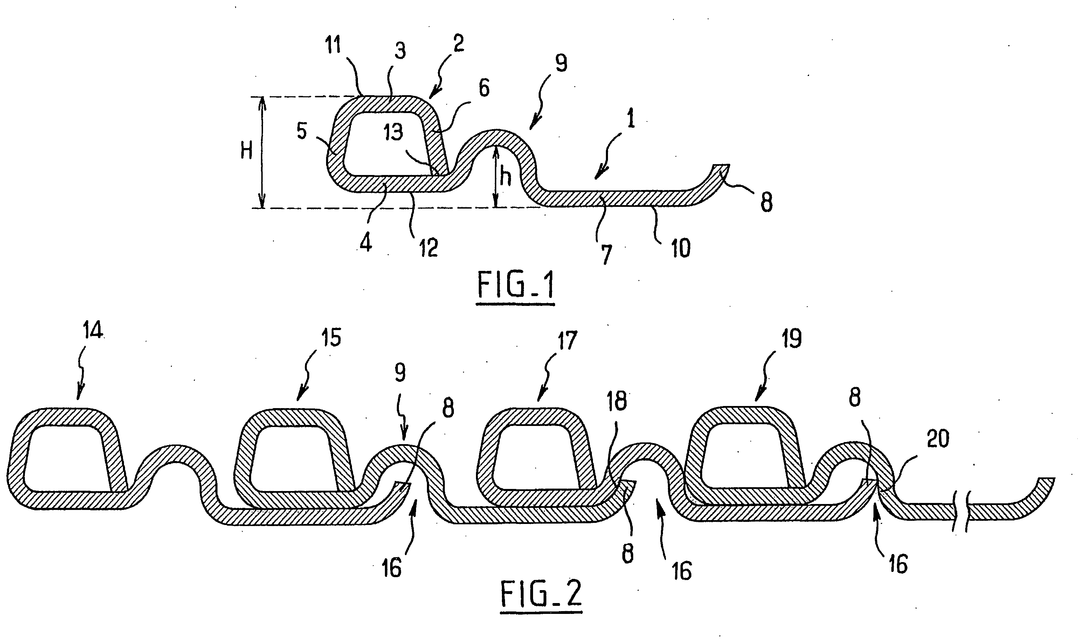

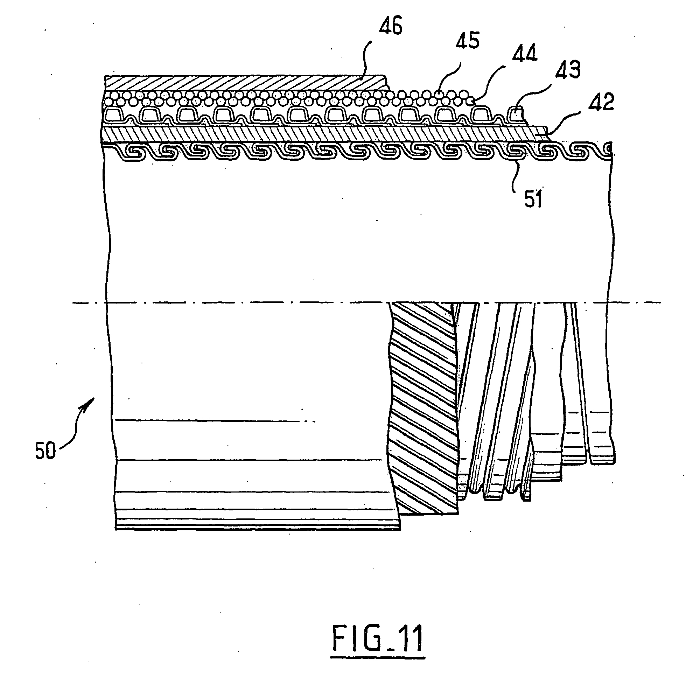

Le tube métallique flexible selon la présente invention est obtenu par un spiralage ou un enroulement hélicoïdal d'une des bandes préformées représentées sur les figures 1, 3, 5, 7 ou 9, l'enroulement étant effectué à faible pas autour d'un axe longitudinal A qui est confondu avec l'axe longitudinal de la conduite flexible représentée sur la figure 11.

La bande métallique 1 représentée sur les figures 1 à 9 est constituée par un feuillard métallique, d'épaisseur constante, par exemple égale à 3 mm. La bande 1 est pliée ou formée à une extrémité de manière à réaliser un caisson de section trapézoïdale 2 qui comprend une paroi supérieure 3 constituant la petite base du trapèze, une paroi inférieure 4 constituant la grande base du trapèze et des parois latérales inclinées 5 et 6, ces diverses parois étant formées par des parties d'une même spire de la bande. La paroi inférieure 4 est prolongée par une partie de bande 7 qui se termine par un bord libre 8.

Un renflement radial ou téton 9 est ménagé entre le caisson 2 et le bord libre 8, en déformant localement une portion de ladite partie de bande 7, la direction de déformation étant dirigée vers la paroi supérieure 3 du caisson 2. Le téton 9 présente une hauteur h, qui est comptée à partir de la face inférieure 10 de la partie de bande 7, inférieure à la hauteur H d'une spire, comptée entre la face 10 et la face externe 11 de la paroi supérieure 3 du caisson 2. La face inférieure 12 de la paroi 4 est décalée en hauteur par rapport à la face 10 d'une distance égale à l'épaisseur du feuillard. De préférence, la hauteur h est comprise entre 20 et 80 % de la hauteur H de la spire, et de préférence entre 20 et 40 %.

Dans tous les modes de réalisation représentés sur les diverses figures, la déformation du téton 9 est initiée de manière à constituer un appui pour l'extrémité 13 de la paroi latérale 6 adjacente du caisson 2. Cet appui constitue une butée à l'ouverture du trapèze lorsqu'une force d'écrasement ou de compression est appliquée soit sur la paroi supérieure 3, soit sur la paroi inférieure 4 du caisson 2.

Le bord libre 8 de la partie de bande 7 est recourbé vers le haut, comme cela est représenté sur les figures 1 et 2, de manière à se loger dans le téton 9 et réaliser l'agrafage entre deux spires consécutives. Suivant le positionnement relatif du bord libre 8 dans le téton 9, le déjoint ou interstice entre deux spires consécutives est plus ou moins grand. Pour les deux spires consécutives 14 et 15 de la figure 2, le bord libre 8 est situé sensiblement au milieu du téton 9, le déjoint 16 étant alors égal sensiblement à la moitié de l'ouverture inférieure du téton 9 ; pour les deux spires consécutives 15 et 17, le bord libre 8 est en appui sur la partie gauche 18 du téton 9, le déjoint 16 étant maximum alors que dans le cas des spires consécutives 17 et 19, le bord libre 8 est en appui sur la partie droite 20 du téton 9 avec un déjoint 16 minimum. Dans les différents cas représentés, l'écartement entre les spires consécutives étant compris entre un maximum délimité par les positions respectives des spires 15 et 17, et un minimum délimité par les positions respectives des spires 17 et 19.

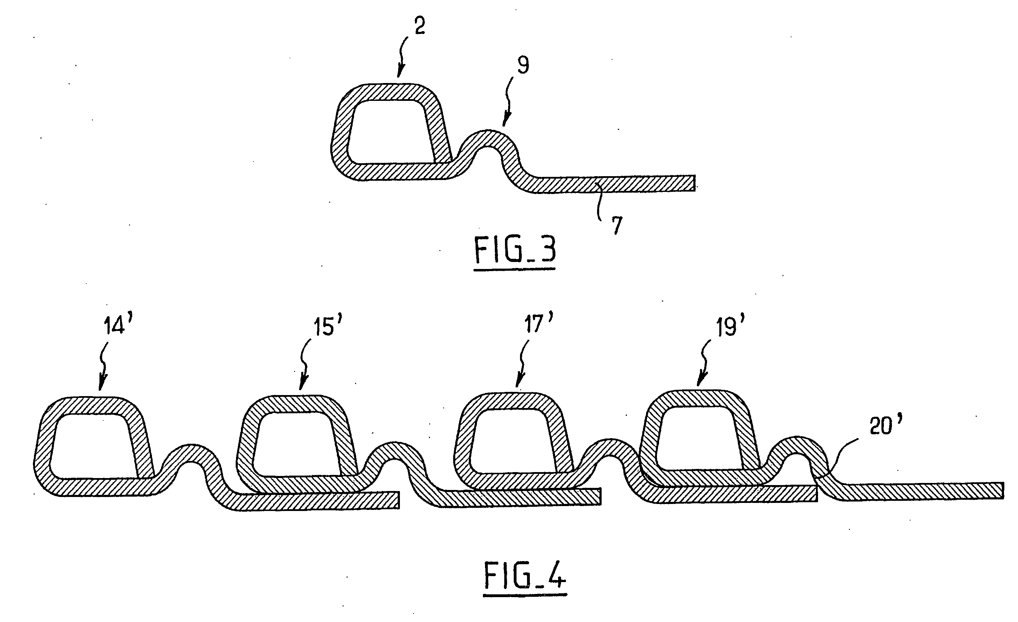

La figure 3 représente une bande analogue à celle de la figure 1 avec un téton 9 qui peut présenter une hauteur h inférieure ou égale à celle du téton correspondant de la figure 1 mais avec un bord libre non recourbé vers le haut. Le tube métallique flexible obtenu par l'assemblage des bandes profilées de la figure 4 est un tube non agrafé. Les déjoints entre les spires de la figure 4 sont compris entre un maximum délimité par la position respective des spires 15' et 17' et un minimum délimité par la position respective des spires 17' et 19', le bord libre 8 étant presque en contact avec la partie 20' du téton 9 de la spire 19', le déjoint moyen étant délimité par la position respective des spires 14' et 15'.

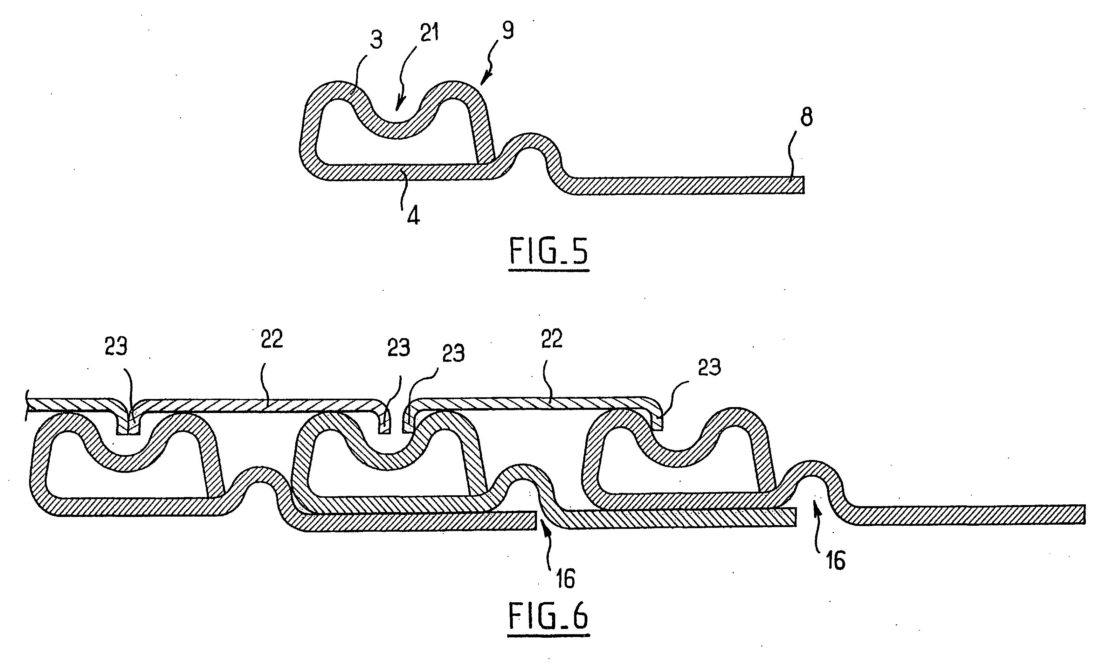

La bande profilée ou préformée représentée sur la figure 5 comprend un caisson 9 dont la paroi supérieure 3 est déformée radialement vers la paroi inférieure 4, de manière à ménager un logement 21, le bord libre 8 n'étant pas recourbé vers le haut. L'agrafage des spires consécutives de la figure 6 est obtenu à l'aide d'une agrafe 22, constituée par une bande enroulable présentant une section en C ou en U dont les branches sensiblement verticales 23 pénètrent dans les logements 21 des spires consécutives, le positionnement de chaque branche 23 dans le logement 21 des spires étant déterminé par la position relative de deux caissons consécutifs qui, à leur tour délimitent un déjoint 16 compris entre un maximum et un minimum.

La bande profilée représentée sur la figure 7 est repliée sur elle-même à une de ses extrémités de telle sorte que la paroi inférieure 4' du caisson est constituée par au moins une double épaisseur 24, 25 de la bande, le caisson 2 ainsi formé étant en appui sur le téton 9. Le bord libre 8 est recourbé vers le haut de manière à permettre un agrafage des spires consécutives comme cela est représenté sur la figure 8. Une telle surépaisseur 24, 25 de la face inférieure 4' du caisson 2 permet d'augmenter l'inertie et réduire en conséquence le flambage des parois latérales qui est réduit au minimum, du fait également de la double épaisseur de la paroi latérale 5', opposée au téton 9. Il est possible, si besoin était, de prévoir d'une part, un bord libre 8 non recourbé et, d'autre part, de déformer la paroi supérieure 3, ainsi que cela est représenté sur la figure 5, et d'assurer l'agrafage à l'aide d'agrafes en U ou en C, de la manière représentée sur la figure 6.

Le fluage d'une gaine d'étanchéité dépend essentiellement de la profondeur ou hauteur h de chaque téton 9, qui, en tout état de cause, est plus faible que dans les réalisations représentées dans FR 2 665 237. Il est évident que le fluage peut dépendre également de l'espace ménagé entre le bord libre 8 et la partie du téton la plus éloignée du caisson.

De manière à améliorer la fonction antifluage, il est possible d'utiliser un fil de forme 30 qui recouvre le déjoint 16 entre deux spires consécutives ou encore qui recouvre la base de chaque téton 9 en étant en appui sur les faces inférieures 10 de deux parties de bande 7 consécutives. Le fil de forme 30 peut être plat comme représenté sur la partie gauche de la figure 9 ou présenter la forme d'un T inversé, ainsi que cela est représenté sur la partie droite de la figure 9, la branche verticale 31 du T se logeant dans le téton correspondant 9. Le fil de forme 30 peut être également une bande tissée antifluage telle que décrite dans le brevet FR 2 744 511.

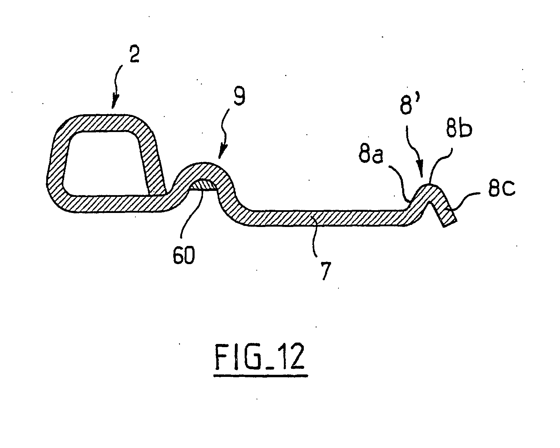

Alternativement, en lieu et place ou en complément du fil de forme 30, il est possible de disposer un jonc (60) souple ou non dans le fond du renflement, ainsi que cela est représenté sur la figure 12.

Le tube métallique flexible selon l'invention peut être utilisé dans une conduite flexible, soit pour constituer une carcasse interne dans le cas d'une conduite flexible dite "Rough bore", soit pour constituer une voûte de pression dans le cas d'une conduite flexible "Smooth bore", soit encore dans une conduite flexible du type représenté sur les figures 10 et 11. La conduite flexible 40 représentée sur la figure 10 comprend, de l'intérieur vers l'extérieur, une carcasse interne 41 obtenue par enroulement hélicoïdal à faible pas de bandes profilées ou préformées selon un des modes de réalisation représentés sur les figures 1 à 9, une gaine d'étanchéité interne 42, par exemple du type polymérique, une voûte de pression 43 obtenue par enroulement hélicoïdal à faible pas de bandes profilées selon un des modes de réalisation représentés sur les figures 1 à 9, des nappes d'armures 44, 45 dites de traction et destinées à résister à l'effort de traction ainsi que cela est bien connu des spécialistes, les armures de traction étant croisées et enroulées avec un angle d'armage inférieur à 55°, et une gaine d'étanchéité externe 46, également du type polymérique. Bien évidemment, la carcasse interne 41 et la voûte de pression 43 peuvent être obtenues à partir de bandes préformées identiques ou différentes.

La conduite flexible 50 représentée sur la figure 11 diffère de celle représentée sur la figure 10 par le fait qu'elle comprend une carcasse interne classique 51 réalisée par exemple à partir d'un enroulement d'un feuillard profilé agrafé de section appropriée telle qu'une section en S allongé.

Dans un autre mode de réalisation, les caissons successifs des spires de la bande sont constitués alternativement par des trapèzes inversés de sorte qu'un trapèze ayant la paroi inférieure comme grande base alterne avec un trapèze ayant la paroi supérieure comme grande base.

Dans un autre mode de réalisation (figure 12), le bord libre de la bande pourrait être du type comprenant une partie ascendante 8a, une partie courbe 8b intermédiaire et une partie descendante 8c, de telle manière que le bord libre présente une sorte de renflement 8' qui se loge dans le renflement 9 de la spire consécutive de la bande adjacente.

## Revendications

1. Tube métallique flexible d'axe longitudinal (A) comprenant au moins une bande (1) d'épaisseur sensiblement constante et enroulée hélicoïdalement autour dudit axe, ladite bande comportant au moins un caisson fermé (2) dont les parois sont formées par des parties d'une même spire de la bande, ledit caisson comportant une paroi supérieure (3) et une paroi inférieure (4) et étant ménagé à une extrémité de ladite bande et dont l'autre extrémité se termine par un bord libre (8), **caractérisé en ce que** le caisson (2) est de section trapézoïdale et **en ce qu'**un renflement (9) dirigé radialement vers la paroi supérieure (3) du caisson (2) est ménagé entre ledit caisson (2) et le bord libre (8) de ladite bande (1).

2. Tube métallique flexible selon la revendication 1, **caractérisé en ce que** le renflement radial (9) présente une hauteur (h) qui est inférieure à la hauteur (H) d'une spire de la bande.

3. Tube métallique flexible selon la revendication 2, **caractérisé en ce que** la hauteur (h) du renflement radial est comprise entre 20 % et 60 % de la hauteur (H) de la spire de la bande.

4. Tube métallique flexible selon la revendication 1, **caractérisé en ce que** la paroi (6) du caisson adjacente au renflement radial (9) est en appui par la base (13) sur ledit renflement radial (9).

5. Tube métallique flexible selon la revendication 1, **caractérisé en ce que** le bord libre (8) de la bande est recourbé et se loge dans le renflement radial (9).

6. Tube métallique flexible selon la revendication 5, **caractérisé en ce que** le bord recourbé est en appui sur la partie (18) du renflement radial qui est la plus proche du caisson.

7. Tube métallique flexible selon la revendication 5, **caractérisé en ce que** le bord recourbé est en appui sur la partie (20) du renflement radial qui est la plus éloignée du caisson.

8. Tube métallique flexible selon la revendication 1, **caractérisé en ce qu'**au moins une portion de la paroi supérieure (3) du caisson (2) est déformée radialement vers la paroi inférieure (4) et **en ce que** deux caissons consécutifs ménagés chacun sur une bande sont agrafés ensemble par un profilé en U ou en C (22).

9. Tube métallique flexible selon la revendication 1 et une des revendications 6 à 8, **caractérisé en ce que** le caisson (2) est réalisé par pliage d'une partie de la bande de telle sorte que la paroi inférieure (4') est constituée par au moins une double épaisseur (24, 25) de ladite bande.

10. Tube métallique flexible selon l'une des revendications 1 à 9, **caractérisé en ce qu'**un fil de forme (30) recouvre les déjoints (16) entre les spires dudit tube.

11. Tube métallique flexible selon la revendication 10, **caractérisé en ce que** le fil de forme (30) est plat.

12. Tube métallique flexible selon la revendication 10, **caractérisé en ce que** le fil de forme (30) présente une section en T inversé, la branche verticale (31) du T étant disposée dans le renflement radial correspondant (9).

13. Tube métallique flexible selon la revendication 1, **caractérisé en ce que** les sections trapézoïdales sont inversées d'un caisson à un autre caisson consécutif.

14. Tube métallique flexible selon l'une quelconque des revendications précédentes, **caractérisé en ce qu'**un jonc (60) est disposé dans le fond du renflement (9).

15. Tube métallique flexible selon l'une quelconque des revendications précédentes, **caractérisé en ce que** le bord libre (8) d'une bande comprend une sorte de renflement (8') susceptible de s'insérer dans le renflement (9) de la bande adjacente.

16. Conduite tubulaire flexible **caractérisée en ce qu'**elle comporte au moins une voûte de pression (43) constituée par le tube métallique flexible selon l'une des revendications 1 à 10.

17. Conduite tubulaire flexible **caractérisée en ce qu'**elle comporte au moins une carcasse interne (41) constituée par le tube métallique flexible selon l'une des revendications 1 à 10.

18. Conduite tubulaire flexible, du type comprenant de l'intérieur vers l'extérieur, une carcasse métallique interne (41) résistant à l'écrasement, une gaine d'étanchéité interne (42), une voûte de pression (43) résistant à la pression interne engendrée par une circulation d'un fluide sous pression dans ladite conduite flexible, au moins une armure de traction (44, 45) et une gaine d'étanchéité externe (46), **caractérisée en ce qu'**au moins la voûte de pression (43) est constituée par le tube métallique flexible selon l'une des revendications 1 à 10.

19. Conduite tubulaire flexible selon la revendication 18, **caractérisée en ce que** la carcasse interne (41) et la voûte de pression (43) sont constituées chacune par le tube métallique flexible selon l'une des revendications 1 à 10.

## Patentansprüche

1. Flexibles Metallrohr mit einer Längsachse (A), das wenigstens ein Band (1) mit im wesentlichen konstanter Dicke aufweist, das schraubenförmig um die genannte Achse gewikkelt ist, wobei dieses Band wenigstens einen geschlossenen Kasten (2) aufweist, dessen Wandungen von Teilen ein und derselben Windung des Bandes gebildet sind, wobei der Kasten eine obere Wandung (3) und eine untere Wandung (4) besitzt und an einem Ende des Bandes angeordnet ist, dessen anderes Ende in einem freien Rand (8) endet, **dadurch gekennzeichnet, daß** der Kasten (2) trapezförmigen Querschnitt hat und daß zwischen dem Kasten (2) und dem freien Rand (8) des Bandes (1) eine Ausbauchung (9) vorgesehen ist, die in radialer Richtung zur äußeren Wandung (3) des Kastens (2) weist.

2. Flexibles Metallrohr nach Anspruch 1, **dadurch gekennzeichnet, daß** die Höhe (h) der radialen Ausbauchung (9) kleiner ist als die Höhe (H) einer Windung des Bandes.

3. Flexibles Metallrohr nach Anspruch 2, **dadurch gekennzeichnet, daß** die Höhe (h) der radialen Ausbauchung im Bereich zwischen 20% und 60% der Höhe (H) der Windung des Bandes liegt.

4. Flexibles Metallrohr nach Anspruch 1, **dadurch gekennzeichnet, daß** die an die radiale Ausbauchung (9) angrenzende Wandung (6) des Kastens mit ihrer Basis (13) an der radialen Ausbauchung (9) zur Anlage kommt.

5. Flexibles Metallrohr nach Anspruch 1, **dadurch gekennzeichnet, daß** der freie Rand (8) des Bandes abgebogen und in der radialen Ausbauchung (7) aufgenommen ist.

6. Flexibles Metallrohr nach Anspruch 5, **dadurch gekennzeichnet, daß** der abgebogene Rand sich an dem Teil (18) der radialen Ausbauchung abstützt; der dem Kasten am nächsten liegt.

7. Flexibles Metallrohr nach Anspruch 5, daß der abgebogene Rand sich an dem Teil (20) der radialen Ausbauchung abstützt, der von dem Kasten am weitesten entfernt ist.

8. Flexibles Metallrohr nach Anspruch 1, **dadurch gekennzeichnet, daß** wenigstens ein Teil der oberen Wandung (3) des Kastens (2) radial in Richtung auf die untere Wandung (4) verformt ist und daß zwei aufeinanderfolgende Kästen; die jeweils an einem Band angeordnet sind, durch ein U- oder C-Profil (22) miteinander verhakt sind.

9. Flexibles Metallrohr nach Anspruch 1 und einem der Ansprüche 6 bis 8, **dadurch gekennzeichnet, daß** der Kasten (2) geformt wird durch Falzen eines Teil des Bandes in der Weise, daß die untere Wandung (4') von wenigstens einer doppelten Lage (24, 25) des Bandes gebildet wird.

10. Flexibles Metallrohr nach einem der Ansprüche 1 bis 9, **dadurch gekennzeichnet, daß** ein Formdraht (30) die Lücken (16) zwischen den Windungen des Rohrs überdeckt.

11. Flexibles Metallrohr nach Anspruch 10, **dadurch gekennzeichnet, daß** der Formdraht (30) flach ist.

12. Flexibles Metallrohr nach Anspruch 10, daß der Formdraht (30) einen Querschnitt in Form eines umgedrehten T besitzt, wobei der vertikale Schenkel (31) des T in der entsprechenden radialen Ausbauchung (9) angeordnet ist.

13. Flexibles Metallrohr nach Anspruch 1, **dadurch gekennzeichnet, daß** die trapezförmigen Querschnitte von einem Kasten und einem anderen nachfolgenden Kasten umgekehrt sind.

14. Flexibles Metallrohr nach einem der vorhergehenden Ansprüche, **dadurch gekennzeichnet, daß** in dem Boden der Ausbauchung (9) ein Stab (60) angeordnet ist.

15. Flexibles Metallrohr nach einem der vorhergehenden Ansprüche, **dadurch gekennzeichnet, daß** der freie Rand (8) eines Bandes eine Art von Ausbauchung (8') aufweist, die in die Ausbauchung (9) des benachbarten Bandes eingefügt werden kann.

16. Flexible Rohrleitung, **dadurch gekennzeichnet, daß** sie wenigstens ein Druckgewölbe (43) aufweist, das aus dem flexiblen Metallrohr nach einem der Ansprüche 1 bis 10 besteht.

17. Flexible Rohrleitung, **dadurch gekennzeichnet, daß** sie wenigstens eine innere Karkasse (41) aufweist, die aus dem flexiblen Metallrohr nach einem der Ansprüche 1 bis 10 besteht.

18. Flexible Rohrleitung des Typs, der von innen nach außen eine quetschfeste innere Metallkarkasse (41), einen inneren Dichtungsmantel (42), ein Druckgewölbe (43), das dem Innendruck widersteht, der durch die Zirkulation eines unter Druck stehenden Fluids in der flexiblen Rohrleitung erzeugt wird, ferner wenigstens eine Zugbewehrung (44, 45) und einen äußeren Dichtungsmantel (46) aufweist, **dadurch gekennzeichnet, daß** zumindest das Druckgewölbe (43) aus dem flexiblen Metallrohr nach einem der Ansprüche 1 bis 10 besteht.

19. Flexible Rohrleitung nach Anspruch 8, **dadurch gekennzeichnet, daß** die innere Karkasse (41) und das Druckgewölbe (43) jeweils aus dem flexiblen Metallrohr nach einem der Ansprüche 1 bis 10 bestehen.

## Claims

1. Flexible metal tube of longitudinal axis (A) which comprises at least one strip (1) of approximately constant thickness wound helically about the said axis, the said strip having at least one closed box element (2) whose walls are formed by portions of the same turn of the strip, the said box element having an upper wall (3) and a lower wall (4) and being provided at one end of the said strip, the other end of the said strip terminating in a free edge (8), **characterized in that** the box element (2) has a trapezoidal cross-section and **in that** a bulge (9) directed radially towards the upper wall (3) of the box element (2) is provided between the said box element (2) and the free edge (8) of the said strip (1).

2. Flexible metal tube according to Claim 1, **characterized in that** the radial bulge (9) has a height (h) which is less than the height (H) of a turn of the strip.

3. Flexible metal tube according to Claim 2, **characterized in that** the height (h) of the radial bulge is between 20% and 80% of the height (H) of the turn of the strip.

4. Flexible metal tube according to Claim 1, **characterized in that** the wall (6) of the box element adjacent to the radial bulge (9) bears via the base (13) on the said radial bulge (9).

5. Flexible metal tube according to Claim 1, **characterized in that** the free edge (8) of the strip is curved and housed in the radial bulge (9).

6. Flexible metal tube according to Claim 5, **characterized in that** the curved edge bears on that portion (18) of the radial bulge which is closest to the box element.

7. Flexible metal tube according to Claim 5, **characterized in that** the curved edge'bears on that portion (20) of the radial bulge which is furthest away from the box element.

8. Flexible metal tube according to Claim 1, **characterized in that** at least part of the upper wall (3) of the box element (2) is deformed radially towards the lower wall (4) and **in that** two consecutive box elements each provided on a strip are interlocked by a U-shaped or C-shaped profile (22).

9. Flexible metal tube according to Claim 1 and one of Claims 6 to 8, **characterized in that** the box element (2) is produced by folding part of the strip in such a way that the lower wall (4') consists of at least a double thickness (24, 25) of the said strip.

10. Flexible metal tube according to one of Claims 1 to 9, **characterized in that** a shaped wire (30) covers the interjoint spaces (16) between the turns of the said tube.

11. Flexible metal tube according to Claim 10, **characterized in that** the shaped wire (30) is flat.

12. Flexible metal tube according to Claim 10, **characterized in that** the shaped wire (30) has a cross-section in the form of an inverted T, the vertical arm (31) of the T being placed in the corresponding radial bulge (9).

13. Flexible metal tube according to Claim 1, **characterized in that** the trapezoidal cross-sections are inverted from one box element to another consecutive box element.

14. Flexible metal tube according to any one of the preceding claims, **characterized in that** a rod (60) is placed in the bottom of the bulge (9).

15. Flexible metal tube according to any one of the preceding claims, **characterized in that** the free edge (8) of a strip comprises a kind of bulge (8') capable of being inserted into the bulge (9) of the adjacent strip.

16. Flexible tubular pipe, **characterized in that** it includes at least one pressure vault (43) consisting of the flexible metal tube according to one of Claims 1 to 10.

17. Flexible tubular pipe, **characterized in that** it includes at least one internal carcass (41) consisting of the flexible metal tube according to one of Claims 1 to 10.

18. Flexible tubular pipe, of the type comprising, from the inside outwards, a crush-resistant internal metal carcass (41), an inner sealing sheath (42), a pressure vault (43) able to withstand the internal pressure generated by flow of a pressurized fluid in the said flexible pipe, at least one tension armour (44, 45) and an outer sealing sheath (46), **characterized in that** at least the pressure vault (43) consists of the flexible metal tube according to one of Claims 1 to 10.

19. Flexible tubular pipe according to Claim 18, **characterized in that** the internal carcass (41) and the pressure vault (43) each consist of the flexible metal tube according to one of Claims 1 to 10.
